# EUROPEAN PATENT SPECIFICATION

(11) **EP 0 989 142 B1**
(45) Date of publication and mention of the grant of the patent: **11.12.2002**
(21) Application number: 99202999.1
(22) Date of filing: 15.09.1999
(51) Int. Cl.: C08F 4/68, C08F 210/16

(54) **PROCESS FOR THE PREPARATION OF EO (D) M COPOLYMERS WITH A NARROW MOLECULAR WEIGHT DISTRIBUTION**
VERFAHREN ZUR HERSTELLUNG VON EP(D)M COPOLYMERE MIT ENGER MOLEKULARGEWICHTSVERTEILUNG
PROCEDE DESTINE A LA FABRICATION DE COPOLYMERES EP(D)M AYANT UNE DISTRIBUTION ETROITE DU POIDS MOLECULAIRE

(30) Priority: 24.09.1998 IT MI982058
(43) Date of publication of application: 29.03.2000
(73) Proprietor: Polimeri Europa S.p.A., 72100 Brindisi (IT)
(72) Inventor: Tanaglia, Tiziano, 40141 Bologna (IT); Masi, Francesco, 20079 Sant'Angelo Lodigiano (Lodi) (IT)
(74) Representative: De Gregori, Antonella

(56) References cited:
- EP-A- 0 375 199
- EP-A- 0 619 327
- EP-A- 0 630 915
- EP-A- 0 751 155
- WO-A-91/03505
- US-A- 4 508 842

## Description

The present invention relates to a process for the preparation of ethylene-propylene (EP) elastomeric copolymers and ethylene-propylene-diene (EPDM) elastomers with a reduced content of chlorine and with a narrow molecular weight distribution, prepared by means of a polymerization process in liquid phase (solution or suspension) or in gas phase, preferably in a liquid monomer suspension.

At present, EPD(M) elastomeric copolymers are produced in the presence of catalysts containing inorganic chlorine which remains englobed in the polymer at the end of the polymerization, causing corrosion problems of the polymer itself.

This problem is particularly felt in the case of polymerization with a slurry (suspension) process in which the purification phase of the polymer is not very efficient. On the other hand the process in suspension is preferable for other reasons such as high productivity, energy saving and reduced environmental impact.

The catalytic system presently used for producing EPD(M) elastomers consists of a Vanadium salt, a chlorinated Aluminum alkyl and an activator (chlorinated organic compound).

The presence of chlorinated aluminum alkyls (inorganic chlorine), however, produces a serious corrosion problem and a drop in the dielectric properties. In addition, the acidity of the aluminum compound may cause undesired cationic reactions on the double bonds of the terpolymers, producing cross-linked material which can lead to the formation of non-dispersed particles on the surface of the end-articles.

In order to solve this problem, patent literature describes catalytic systems based on Vanadium in which the Aluminum compound is present in the form of aluminum alkyl which is therefore not corrosive and has a reduced Lewis acidity. These catalytic systems, however, are characterized by a high crystallinity from polyethylene, due to a non-homogeneous distribution of the comonomers, and a wide molecular weight distribution. This group of catalysts comprises those typically used for polyethylene with a wide molecular weight distribution, as described for example in US-A-4,508,842. These catalysts however have the disadvantage of not giving good elastomers.

Other patent documents (see for example WO91/03505) claim the use of catalytic systems based on aluminum alkyls, but also in this case the products obtained are not satisfactory from the point of view of MWD and crystallinity (at least in the case of the polymerization system in a liquid monomer suspension).

Italian patent application MI93/A000691 (corresponding to EP 0619327 published on 12/10/94) filed by the same applicant, discloses the use of mixtures of chlorinated aluminum alkyls and trialkylaluminum as cocatalyst, the catalyst consisting of Vanadium (III) acetylacetonate in the presence of a chlorinated activator. In this case, however, the total elimination of the chlorinated aluminum alkyl caused a considerable reduction in the catalytic yield, and in addition the method was only effective for copolymers and terpolymers rich in linked ethylene.

Italian patent application MI96/A002069 (corresponding to EP 0835883 published on 15.4.98) filed by the same applicant describes the use of aluminum trimethyl (TMA) combined with derivatives of Vanadium acetylacetonate. With this catalytic system some of the above problems were solved, however the ideal MWD was reached at temperatures which were too high for the process in suspension. In addition the system was jeopardized by the higher cost of TMA with respect to the aluminum trialkyls commercially available.

A process for the preparation of EP(D)M copolymers with a low chlorine content has now been found, which overcomes the above disadvantages in that it allows EPD(M) copolymers to be obtained with a narrow MWD, even at low temperatures.

In accordance with this, the present invention relates to a process for the preparation in liquid phase of EP(D)M copolymers with a low chlorine content, the above preparation being effected in the presence of:
a) a catalytic component essentially consisting of an alkylated Vanadium compound and an excess of an organic compound of Aluminum selected from those having general formula AlR₃, wherein R is a C₁-C₂₀ monofunctional alkyl radical;
b) a catalytic activator selected from chlorinated organic compounds;
characterized in that the catalytic component (a) is prepared by the reaction between a compound of vanadium and an excess of AlR₃ in the presence of a chlorinated organic compound.

The catalytic component (a) is prepared at a temperature ranging from 30 to 125°C, preferably from 40 to 70°C, and with a reaction time usually ranging from 10 seconds to 2 hours, preferably from 15 to 20 minutes.

The molar ratio Al/V ranges from 5/1 to 1000/1, preferably from 10/1 to 100/1.

The preparation of component (a) can be carried out in a single step or in several steps. In the latter case, the first step consists of the reaction between the Vanadium compound and a part of the compound AlR₃, the subsequent steps consisting of the reaction of the product obtained in the first step with the remaining part of AlR₃.

More specifically, the synthesis of component (a) is carried out as follows:
(i) the vanadium component in the form of a pure compound, supported or prepolymerized, dissolved or suspended in a suitable solvent, is treated with the chlorinated organic compound;
(ii) the suspension or solution obtained in step (i) is then treated with an excess of AlR₃ at the desired temperature (from 30 to 125°C) for the desired time (from 10 seconds to 2 hours);
(iii) the product obtained in step (ii) is optionally further treated with additional quantities of AlR₃, the same or different from that used in step (ii), preferably at lower temperatures.

All the above operations should be carried out, as is known to experts in the field, in an atmosphere of inert gas or polymerizable olefin, for example ethylene.

Vanadium compounds which can be used are derivatives of Vanadium in oxidation state 2 to 5, complexed with at least one kelating ligand, for example beta-dicarbonyl, or having the general formula claimed in Italian patent application MI96/A000294, or components deriving therefrom, such as those described in Italian patent applications MI94/A002528 and MI95/A001403.

Chlorinated organic compounds which can be mentioned are, for example, CCl₄, CHCl₃, C₂Cl₄H₂, CFCl₃, CCl₃COOEt, n-butylperchlorocrotonate, all compounds normally used as chlorinated activators.

The chlorinated organic compound, which can be used in step (a), can be the same as or different from that used in step (b).

As far as AlR₃ is concerned, R is a linear or branched, C₁-C₂₀ alkyl radical, optionally containing saturated or aromatic cycles. The various R radicals can obviously be the same as or different from each other.

Component (a) thus synthesized can then be used, combined with compound (b), for the synthesis of co- and terpolymers of ethylene.

The chlorinated organic compound (b) can be the same as or different from that used in (a).

If the preparation of terpolymers is desired, i.e. EPDM, the diene is selected from:
- dienes with a linear chain such as 1,4-hexadiene and 1,6-octadiene;
- acyclic dienes with a branched chain such as 5-methyl-1,4-hexadiene; 3,7-dimethyl-1,6-octadiene; 3,7-dimethyl-1,7-octadiene;
- alicyclic dienes with a single ring such as 1,4-cyclohexadiene; 1,5-cyclo-octadiene; 1,5-cyclododecadiene;
- dienes having condensed and bridged alicyclic rings, such as methyltetrahydroindene; dicyclopentadiene; bicyclo-[2.2.1]hepta-2,5-diene; alkenyl, alkylidene, cycloalkenyl and cycloalkylidene norbornenes such as 5-methylene-2-norbornene; 5-ethylidene-2-norbornene (ENB); 5-propenyl-2-norbornene.

The above non-conjugated dienes can be present in a maximum quantity of 25% by weight, preferably 12% by weight.

The following examples provide a better understanding of the present invention.

### EXAMPLES

The catalyst used in the experimental examples is a catalyst prepared according to the method indicated in Italian patent application 95 IT-MI 1403 filed by the same applicant, according to what is described in experimental example 10 of the above patent application. According to this technique, the catalytic system is prepared by mixing, in an atmosphere of ethylene (or ethylene-alpha olefin), Vanadium (III) acetylacetonate suspended in paraffinic oil and an essentially hydrocarbon solution of DEAC (diethylaluminum chloride). The solid thus obtained is used as component of the catalytic system.

All the reagents used are commercial products; the solvents and liquid activators were deaerated in nitrogen and anhydrified on alumina or molecular sieves.

The copolymers resulting from the polymerization tests were characterized as follows:
Composition: this was determined by means of infra-red analysis of the polymer in films having a thickness of 0.2 mm using a Perkin Elmer FTIR spectrophotometer model 1760. The propylene content was determined by measuring the ratio between the band absorbances at 4390 and 4255 cm⁻¹ and using a calibration curve calibrated with standard polymers. The ENB content was determined by measuring the ratio between the band absorbances at 1688 and 4330 cm⁻¹ and using a calibration curve calibrated with standard polymers.

The average molecular weight and molecular weight distribution were determined with the gel permeation chromatographic technique in 1,2-dichlorobenzene, using PL-GEL® (produced by Polymer Lab) as stationary phase with 10 micron particles, having a porosity of 10², 10³, 10⁴, 10⁵ nm respectively. The molecular weight calculation was corrected in relation to the average composition of the polymer according to the equation proposed by Sholte.

### COMPARATIVE EXAMPLE 1

1744 ml of liquid propylene are charged into a perfectly anhydrous 2.8 dm³ autoclave equipped with a propeller stirrer.

The autoclave is then thermostat-regulated at 50°C, saturated with ethylene until an overpressure of 7.3 bars is reached; a further overpressure of 0.2 bars of hydrogen is then added. The total pressure on the top of the autoclave proves to be 27 bars.

A hexane solution containing 2.34 mmoles of TMA is then added, followed by an aliquot of the catalyst containing 0.039 mmoles of vanadium suspended in hexane and 0.98 mmoles of CCl₄ (Al/V = 60 molar, CCl₄/V = 25 molar).

The reaction is carried out for 60 minutes at a constant temperature, continuously feeding ethylene to keep the total pressure constant. At the end of this period the autoclave is opened and 256 grams of polymer are recovered.

The characterizations of the polymer thus obtained are indicated in table 1.

### COMPARATIVE EXAMPLE 2

810 ml of liquid propylene and 470 grams of liquid propane are charged into the same autoclave as example 1.

The autoclave is then thermostat-regulated at 50°C and saturated with ethylene until an overpressure of 4.5 bars is reached. A further overpressure of 0.2 bars of hydrogen is then added.

The total pressure on the top of the autoclave proves to be 22.5 bars.

A hexane solution containing 2.94 mmoles of TMA is then added, followed by an aliquot of the catalyst containing 0.049 mmoles of vanadium suspended in hexane and 1.22 mmoles of CCl₄ (Al/V = 60 molar, CCl₄/V = 25 molar).

The reaction is carried out for 60 minutes at a constant temperature, continuously feeding ethylene to keep the total pressure constant. At the end of this period the autoclave is opened and 210 grams of polymer are recovered.

The relative characterizations are indicated in table 1.

### COMPARATIVE EXAMPLE 3

The catalyst is prepared as follows:

An aliquot of the catalyst containing 0.039 mmoles of Vanadium in hexane are charged, under stirring into a flask; 0.078 mmoles of CCl₄ (CCl₄/V = 2 molar) are then added, followed by a hexane solution containing 2.34 mmoles of TMA (Al/V = 60) and the mixture is left under stirring for 40 minutes at room temperature (20°C).

1803 ml of liquid propylene are charged into a perfectly anhydrous 2.8 dm³ autoclave equipped with a propeller stirrer.

The autoclave is then thermostat-regulated at 45°C and saturated with ethylene until an overpressure of 0.2 bars of hydrogen is reached.

The total pressure on the top of the autoclave proves to be 23.9 bars.

10.7 grams (12 cm³) of 5-ethylidene-2-norbornene (ENB) are then charged.

A hexane solution containing 0.98 mmoles of CCl₄ (CCl₄/V = 25 molar) is then added, followed by the catalyst previously prepared.

The reaction is carried out for 60 minutes at a constant temperature, continuously feeding ethylene to keep the total pressure constant. At the end of this period the autoclave is opened and 113 grams of polymer are recovered.

The relative characterizations are indicated in table 1.

### COMPARATIVE EXAMPLE 4

1803 ml of liquid propylene are charged into a perfectly anhydrous 2.8 dm³ autoclave equipped with a propeller stirrer.

The autoclave is then thermostat-regulated at 45°C and saturated with ethylene until an overpressure of 6.4 bars is reached; a further overpressure of 0.2 bars of hydrogen is subsequently added.

The total pressure on the top of the autoclave proves to be 27 bars.

10.7 grams (12 cm³) of 5-ethylidene-2-norbornene (ENB) are then charged.

A hexane solution containing 4.68 mmoles of TMA is then added and subsequently an aliquot of the catalyst containing 0.078 mmoles of Vanadium suspended in hexane and 1.96 mmoles of CCl₄ (Al/V = 60 molar, CCl₄/V = 25 molar).

The reaction is carried out for 60 minutes at a constant temperature, continuously feeding ethylene to keep the total pressure constant. At the end of this period the autoclave is opened and 180 grams of polymer are recovered.

The relative characterizations are indicated in table 1.

### COMPARATIVE EXAMPLE 5

The catalyst is prepared as follows:

An aliquot of the catalyst containing 0.039 mmoles of Vanadium in hexane are charged, under stirring into a flask; a hexane solution containing 2.34 mmoles of TMA (Al/V = 60) is then added to this solution, the temperature is brought to 60°C and the mixture is left under stirring for 40 minutes.

785 ml of liquid propylene and 474 grams of liquid propane are charged into a perfectly anhydrous 2.8 dm³ autoclave equipped with a propeller stirrer.

The autoclave is then thermostat-regulated at 48°C and saturated with ethylene until an overpressure of 4.6 bars is reached; a further overpressure of 0.2 bars of hydrogen is subsequently added. The total pressure on the top of the autoclave proves to be 21.6 bars.

10.7 grams (12 cm³) of 5-ethylidene-2-norbornene (ENB) are then charged.

A hexane solution containing 0.98 mmoles of CCl₄ (CCl₄/V = 25 molar) is then added, followed by the catalyst previously prepared.

The reaction is carried out for 60 minutes at a constant temperature, continuously feeding ethylene to keep the total pressure constant. At the end of this period the autoclave is opened and 60 grams of polymer are recovered.

The relative characterizations are indicated in table 1.

**TABLE 1**

| | 1C | 2C | 3C | 4C | 5C |
|---|---|---|---|---|---|
| Polymer yield (kg/gV) | 128 | 84 | 56 | 45 | 30 |
| Linked polypropyl. % w | 36.3 | 34.4 | 51.7 | 37 | 34.8 |
| Linked ENB % w | 0 | 0 | 2.6 | 2.2 | 1.87 |
| MWD ((Mw/Mn) | 15 | 17 | 12 | 15.6 | 14.5 |

The data of table 1 show that the use of propane does not substantially modify the MWD of the polymers obtained (comparative examples 1 and 2).

In any case, all the comparative examples of table 1 show how the molecular weight distribution is always higher than or equal to 12, with respect to both copolymers and terpolymers, with different levels of propane as diluent and temperatures ranging from 40 to 50°C.

This applies when the catalytic system is fed with all the various pre-contact methods.

### EXAMPLE 6

The catalyst is prepared as follows:

An aliquot of the catalyst containing 0.039 mmoles of Vanadium in hexane are charged, under stirring, into a flask; 0.039 mmoles of CCl₄ (CCl₄/V = 1 molar) followed by a hexane solution containing 2.34 mmoles of TMA (Al/V = 60) are then added to this solution and the mixture is left under stirring for 40 minutes at 60°C.

728 ml of liquid propylene and 480 grams of liquid propane are charged into a perfectly anhydrous 2.8 dm³ autoclave equipped with a propeller stirrer.

The autoclave is then thermostat-regulated at 45°C and saturated with ethylene until an overpressure of 6.7 bars is reached; a further overpressure of 0.1 bars of hydrogen is subsequently added. The total pressure on the top of the autoclave proves to be 22.4 bars.

10.7 grams (12 cm³) of 5-ethylidene-2-norbornene (ENB) are then charged.

A hexane solution containing 0.98 mmoles of CCl₄ (CCl₄/V = 25 molar) is then added, followed by the catalyst previously prepared.

The reaction is carried out for 60 minutes at a constant temperature, continuously feeding ethylene to keep the total pressure constant. At the end of this period the autoclave is opened and 110 grams of polymer are recovered.

The relative characterizations are indicated in table 2.

### EXAMPLE 7

The catalyst is prepared as follows:

An aliquot of the catalyst containing 0.039 mmoles of Vanadium in hexane are charged, under stirring, into a flask; 0.039 mmoles of CCl₄ (CCl₄/V = 1 molar) followed by a hexane solution containing 2.34 mmoles of TMA (Al/V = 60) are then added to this solution and the mixture is left under stirring at 60°C for 40 minutes.

601 ml of liquid propylene and 572 grams of liquid propane are charged into a perfectly anhydrous 2.8 dm³ autoclave equipped with a propeller stirrer.

The autoclave is then thermostat-regulated at 45°C and saturated with ethylene until an overpressure of 4.4 bars is reached; a further overpressure of 0.2 bars of hydrogen is subsequently added. The total pressure on the top of the autoclave proves to be 20.0 bars.

10.7 grams (12 cm³) of 5-ethylidene-2-norbornene (ENB) are then charged.

A hexane solution containing 0.86 mmoles of CCl₄ (CCl₄/V = 22 molar) is then added, followed by the catalyst previously prepared.

The reaction is carried out for 60 minutes at a constant temperature, continuously feeding ethylene to keep the total pressure constant. At the end of this period the autoclave is opened and 43 grams of polymer are recovered.

The relative characterizations are indicated in table 2.

### EXAMPLE 8

The catalyst is prepared as follows:

An aliquot of the catalyst containing 0.078 mmoles of Vanadium in hexane are charged, under stirring, into a flask; 0.156 mmoles of CCl₄ (CCl₄/V = 2 molar) followed by a hexane solution containing 3.12 mmoles of TEA (Al/V = 40) are then added to this solution and the mixture is left under stirring for 10 minutes at 45°C. The mixture is cooled and 4.68 mmoles of TEA (Al/V = 60) are added. The overall molar ratio Al/V = 100.

370 ml of liquid propylene and 480 grams of liquid propane are charged into a perfectly anhydrous 2.8 dm³ autoclave equipped with a propeller stirrer.

The autoclave is then thermostat-regulated at 45°C and saturated with ethylene until an overpressure of 5.62 bars is reached; a further overpressure of 0.1 bars of hydrogen is subsequently added. The total pressure on the top of the autoclave proves to be 21.3 bars.

10.7 grams (12 cm³) of 5-ethylidene-2-norbornene (ENB) are then charged.

A hexane solution containing 1.56 mmoles of CCl₄ (CCl₄/V = 20 molar) is then added, followed by the catalyst previously prepared.

The reaction is carried out for 60 minutes at a constant temperature, continuously feeding ethylene to keep the total pressure constant. At the end of this period the autoclave is opened and 293 grams of polymer are recovered.

The relative characterizations are indicated in table 2.

### EXAMPLE 9

The catalyst is prepared as follows:

An aliquot of the catalyst containing 0.039 mmoles of Vanadium in hexane are charged, under stirring, into a flask; 0.078 mmoles of CCl₄ (CCl₄/V = 2 molar) followed by a hexane solution containing 1.56 mmoles of TIBA (Al/V = 40) are then added to this solution. The mixture is left under stirring for 10 minutes at 45°C. It is then cooled and 2.34 mmoles of TIBA (Al/V = 60) are added. The overall molar ratio Al/V = 100.

351 ml of liquid propylene and 480 grams of liquid propane are charged into a perfectly anhydrous 2.8 dm³ autoclave equipped with a propeller stirrer.

The autoclave is then thermostat-regulated at 45°C and saturated with ethylene until an overpressure of 5.62 bars is reached; a further overpressure of 0.1 bars of hydrogen is subsequently added. The total pressure on the top of the autoclave proves to be 21.3 bars.

10.7 grams (12 cm³) of 5-ethylidene-2-norbornene (ENB) are then charged.

A hexane solution containing 0.78 mmoles of CCl₄ (CCl₄/V = 20 molar) is then added, followed by the catalyst previously prepared.

The reaction is carried out for 60 minutes at a constant temperature, continuously feeding ethylene to keep the total pressure constant. At the end of this period the autoclave is opened and 87 grams of polymer are recovered.

The relative characterizations are indicated in table 2.

**TABLE 2**

| | Ex.6 | Ex.7 | Ex.8 | Ex.9 |
|---|---|---|---|---|
| Polymer yield (kg/gV) | 55 | 21.5 | 73 | 43.5 |
| Linked polypropyl. % w | 34 | 42.7 | 31.3 | 31.8 |
| Linked ENB % w | 1.8 | 2.8 | 1.4 | 3.3 |
| MWD ((Mw/Mn) | 4.8 | 4.9 | 3.8 | 6.9 |

To provide a more detailed illustration, table 3 shows the experimental conditions used for all the experimental examples and the MWD resulting from each single experiment.

**TABLE 3**

| EX. | Propane % | AlR₃ | Al/V | CCl₄/V Moles | Copol./ Terpol. | Temp. °C | MWD |
|---|---|---|---|---|---|---|---|
| 1c | 0 | TMA | 60 | 25 | copol. | 50 | 15 |
| 2c | 50 | TMA | 60 | 25 | copol. | 50 | 17 |
| 3c | 0 | TMA | 60 | 27 | terpol. | 45 | 12 |
| 4c | 0 | TMA | 60 | 25 | terpol. | 45 | 15.6 |
| 5c | 50 | TMA | 60 | 23 | terpol. | 48 | 14.6 |
| 6 | 50 | TMA | 60 | 26 | terpol. | 45 | 4.8 |
| 7 | 50 | TMA | 60 | 22 | terpol. | 45 | 4.9 |
| 8 | 50 | TEA | 100 | 22 | terpol. | 45 | 3.8 |
| 9 | 50 | TIBA | 100 | 22 | terpol. | 45 | 6.9 |

COMPARISON between the data of table 1 (comparative examples) and those of table 2 (examples of the present invention.

From the data of the above tables, it can be clearly seen that all the comparative examples, both with or without propane in the liquid phase, produce copolymers or terpolymers with MWD which are much worse than those obtained with the processes of the present invention. This further demonstrates that the narrow molecular weight distribution is due to the preparation process of the catalytic species, and definitely not to the reaction parameters (for example Al/V, type of AlR₃, CCl₄/V ratio). The fact that tests 1c, 3c and 4c have higher yields is due to the fact, which is well known to experts in the field, that the absence of propane favours an increase in the yields.

## Claims

1. A process for the preparation in liquid phase of EP(D)M copolymers with a low chlorine content, the above preparation being effected in the presence of:
(a) a catalytic component essentially consisting of an alkylated Vanadium compound and an excess of an organic compound of Aluminum selected from those having general formula AlR₃, wherein R is a C₁-C₂₀ monofunctional alkyl radical;
(b) a catalytic activator selected from chlorinated organic compounds;
**characterized in that** the catalytic component (a) is prepared by means of the reaction between a vanadium compound and an excess of AlR₃ in the presence of a chlorinated organic compound.

2. The process according to claim 1, **characterized in that** the catalytic component (a) is prepared at a temperature ranging from 30 to 125°C and with a reaction time usually ranging from 10 seconds to 2 hours.

3. The process according to claim 2, **characterized in that** the catalytic component (a) is prepared at a temperature ranging from 40 to 70°C and with a reaction time ranging from 15 to 20 minutes.

4. The process according to claim 1, **characterized in that** the molar ratio between AlR₃ and Vanadium compound ranges from 5/1 to 1000/1.

5. The process according to claim 4, **characterized in that** the molar ratio between AlR₃ and Vanadium compound ranges from 10/1 to 100/1.

6. The process according to claim 1, wherein the chlorinated organic compound of steps (a) and (b) is selected from CCl₄, CHCl₃, C₂Cl₄H₂ CFCl₃, CCl₃COOEt, n-butyl-perchlorocrotonate.

## Patentansprüche

1. Verfahren zur Herstellung von EP(D)M-Copolymeren mit geringem Chlorgehalt in flüssiger Phase, wobei die Herstellung durchgeführt wird in Gegenwart von:
(a) einer katalytischen Komponente, welche im Wesentlichen besteht aus einer alkyllerten Vanadiumverbindung und einem Überschuss einer organischen Verbindung von Aluminium, ausgewählt aus solchen, welche die allgemeine Formel AlR₃ aufweisen, worin R ein C₁-C₂₀ monofunktionales Alkylradikal ist;
(b) einem katalytischen Aktivator, ausgewählt aus chlorierten organischen Verbindungen;
**dadurch gekennzeichnet, dass** die katalytische Komponente (a) hergestellt ist mittels der Reaktion zwischen einer Vanadiumverbindung und einem Überschuss an AlR₃ in Gegenwart einer chlorierten organischen Verbindung.

2. Verfahren nach Anspruch 1, **dadurch gekennzeichnet, dass** die katalytische Komponente (a) hergestellt ist bei einer Temperatur im Bereich von 30 bis 125 °C und mit einer Reaktionszeit von üblicherweise im Bereich von 10 Sekunden bis 2 Stunden.

3. Verfahren nach Anspruch 2, **dadurch gekennzeichnet, dass** die katalytische Komponente (a) hergestellt ist bei einer Temperatur im Bereich von 40 bis 70 °C und mit einer Reaktionszeit von 15 bis 20 Minuten.

4. Verfahren nach Anspruch 1, **dadurch gekennzeichnet, dass** das molare Verhältnis zwischen AlR₃ und der Vanadiumverbindung im Bereich von 5/1 bis 1000/1 liegt.

5. Verfahren nach Anspruch 4, **dadurch gekennzeichnet, dass** das molare Verhältnis von AlR₃ und der Vanadiumverbindung im Bereich von 10/1 bis 100/1 liegt.

6. Verfahren nach Anspruch 1, worin die chlorierte organische Verbindung der Schritte (a) und (b) ausgewählt ist aus CCl₄, CHCl₃, C₂Cl₄H₂, CFCl₃, CCl₃COOEt, n-Butyl-Perchlorocrotonat.

## Revendications

1. Procédé pour la préparation en phase liquide de copolymères d'EP(D)M avec une faible teneur en chlore, la préparation ci-dessus étant effectuée en présence de :
(a) un composant catalytique consistant essentiellement en un composé de vanadium alkylé et un excès d'un composé organique d'aluminium choisi parmi ceux de formule générale AlR₃, dans laquelle R est un radical alkyle monofonctionnel en C₁ à C₂₀ ;
(b) un activateur catalytique choisi parmi les composés organiques chlorés ;
**caractérisé en ce que** le composant catalytique (a) est préparé au moyen de la réaction entre un composé de vanadium et un excès de AlR₃ en présence d'un composé organique chloré.

2. Procédé selon la revendication 1, **caractérisé en ce que** le composant catalytique (a) est préparé à une température comprise entre 30 et 125°C et avec un temps de réaction compris en général entre 10 secondes et 2 heures.

3. Procédé selon la revendication 2, **caractérisé en ce que** le composant catalytique (a) est préparé à une température comprise entre 40 et 70°C, et avec un temps de réaction compris entre 15 et 20 minutes.

4. Procédé selon la revendication 1, **caractérisé en ce que** le rapport molaire entre AlR₃ et le composé de vanadium s'étend de 5/1 à 1000/1.

5. Procédé selon la revendication 4, **caractérisé en ce que** le rapport molaire entre AlR₃ et le composé de vanadium s'étend de 10/1 à 100/1.

6. Procédé selon la revendication 1, dans lequel le composé organique chloré des étapes (a) et (b) est choisi parmi CCl₄, CHCl₃, C₂Cl₄H₂, CFCl₃, CCl₃COOEt, le n-butyl-perchlorocrotonate.
